# EUROPEAN PATENT APPLICATION

(11) **EP 4 012 872 A1**
(43) Date of publication of application: **15.06.2022**
(21) Application number: 21212775.7
(22) Date of filing: 07.12.2021
(51) Int. Cl.: H02J 3/00, H02J 9/06

(54) **A FLEXIBLE AND ADAPTIVE METHOD FOR VARIOUS HIGH SPEED BUSBAR TRANSFER SCENARIOS**

(30) Priority: 10.12.2020 CN 202011437735
(71) Applicant: Siemens Aktiengesellschaft, 80333 München (DE)
(72) Inventor: LIU, Zhi Xiong, Nanjing, 210041 (CN); LI, Jun Hong, Nanning, 530029 (CN); CUI, Feng Xian, Nanjing, 211100 (CN); GAO, Di Jun, Nanjing, 211100 (CN); QIN, Lei Ming, Nanjing, 211100 (CN); CAO, Zhen, Nanjing, 211100 (CN); SCHNEIDER, Sebastian, 90522 Oberasbach (DE)
(74) Representative: Horn Kleimann Waitzhofer Patentanwälte PartG mbB

(57) **Abstract**

The present invention provides a method of a fast switching device performing a fast switching operation and a fast switching device. The fast switching device is used for a switchover between power supplies of a power grid. The power grid comprises at least one sub-grid. Each sub-grid comprises a plurality of power lines. The plurality of power lines consist of a plurality of power supply lines, a busbar and a plurality of feeders. Each power supply line and each feeder are both connected to the busbar. A circuit-breaker is available on at least two power lines, respectively. The method comprises: acquiring configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation; performing a fast switching operation according to the configuration information.

## Description

### TECHNICAL FIELD

The present invention relates to the field of power systems, in particular to a method of a fast switching device performing a fast switching operation and a fast switching device.

### BACKGROUND ART

The continuous and reliable power supply of power grids is the basic condition for the production of factories. For this reason, at least two power lines are usually available in a power grid, each power supply line is connected to a busbar and each feeder with a load is connected to the busbar. Normally, the busbar in the power grid is connected to a main power supply. When the main power supply fails or an overhaul is required, the busbar needs to be switched to a standby power supply quickly and reliably to guarantee the continuity of power supply. This process can be completed by a fast switching device. Specifically, the fast switching device disconnects the circuit-breaker of the main power supply and closes the circuit-breaker of the standby power supply to complete a switchover between the main power supply and the standby power supply.

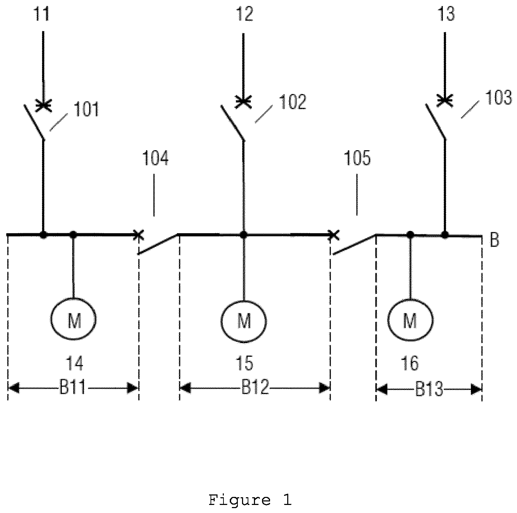

With the development of science and technology, power grids gradually become complex and contain more and more sub-grids and power lines. For example, a plurality of power supply lines and feeders may be connected to a busbar, a power circuit-breaker is provided on each of the plurality of power supply lines, the busbar may be segmented, and the plurality of busbar segments are connected through a bus tie circuit-breaker. As shown in fig. 1, the power grid consists of three power supply lines 11, 12 and 13, one busbar B and three feeders, wherein the three power supply lines and the three feeders are connected to the busbar B, a circuit-breaker is provided on each power supply line, the circuit-breakers are the circuit-breaker 101, the circuit-breaker 102 and the circuit-breaker 103, respectively, two bus tie circuit-breakers 104 and 105 are provided on the busbar B, the bus tie circuit-breakers divide the busbar B into three segments, which are the busbar segment B11, the busbar segment B12 and the busbar segment B13, respectively. Thus, a plurality of groups of circuit-breakers requiring a switching operation may exist. Since the operating range of a single fast switching device is fixed, a plurality of fast switching devices are required to cooperate to control the circuit-breakers to be switched over in each group when the range required to be operated is wide. For example, a fast switching device is required for the circuit-breakers on the two power supply lines on the left, a fast switching device is required for the circuit-breakers on the two power supply lines on the right, and other fast switching devices are required for the circuit-breakers on the busbar. So many fast switching devices will lead to a high cost and a complex power grid.

### SUMMARY OF THE INVENTION

In view of this, the present invention provides a method of a fast switching device performing a fast switching operation, the fast switching device is used for a switchover between power supplies of a power grid, the power grid comprises at least one sub-grid, each sub-grid comprising a plurality of power lines, the plurality of power lines consist of a plurality of power supply lines, a busbar and a plurality of feeders, each power supply line and each feeder are both connected to the busbar, a circuit-breaker is available on at least two power lines, respectively, and the method comprises:
acquiring configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation, and
performing a fast switching operation according to the configuration information.

According to the above-mentioned method, alternatively, acquiring configuration information comprises:
analyzing the sub-grid to obtain switching directions; generating the configuration information according to the switching directions.

Alternatively, the configuration information contains the priority of each switching direction or the priority of each switching direction in each group after switching directions are grouped according to the circuit-breakers to be opened.

Alternatively, after the configuration information is received but before a fast switching operation is performed according to the configuration information, the method further comprises:
storing the configuration information in a configuration table in the fast switching device.

Alternatively, performing a fast switching operation according to the configuration information comprises:
determining the current circuit-breaker to be opened;
acquiring at least one switching direction from the configuration information according to the current circuit-breaker to be opened, wherein the switching direction contains the current circuit-breaker to be opened, determining the switching direction required to be operated according to the priorities of switching directions, and respectively opening and closing the two circuit-breakers in the switching direction required to be operated; or looking up the switching direction containing the current circuit-breaker to be opened in the configuration information according to the priority order, and respectively opening and closing the two circuit-breakers in the switching direction required to be operated after finding the switching direction with the highest priority.

Alternatively, at least one switching direction contains a circuit-breaker located on the busbar.

Alternatively, after acquiring configuration information, the method further comprises: acquiring extended configuration information, wherein the extended configuration information contains a plurality of switching directions added after the power grid is extended, and each switching direction in the extended configuration information contains a circuit-breaker to be opened and a circuit-breaker to be closed.

Alternatively, the fast switching device is used to control fast switching operations of a plurality of sub-grids.

The present invention provides a fast switching device, the fast switching device is used for a switchover between power supplies of a power grid, the power grid comprises at least one sub-grid, each sub-grid comprises a plurality of power lines, the plurality of power lines consist of a plurality of power supply lines, a busbar and a plurality of feeders, each power supply line and each feeder are both connected to the busbar, a circuit-breaker is available on at least two power lines, respectively, and the fast switching device comprises:
an acquisition unit, configured to acquire configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation, and
an execution unit, configured to perform a fast switching operation according to the configuration information.

Alternatively, the acquisition unit specifically comprises:
an analysis subunit, configured to analyze the sub-grid to obtain switching directions, and
a generation subunit, configured to generate the configuration information according to the switching directions.

Alternatively, the execution unit is specifically configured to:
determine the current circuit-breaker to be opened;
acquire at least one switching direction from the configuration information according to the current circuit-breaker to be opened, wherein the switching direction contains the current circuit-breaker to be opened, determine the switching direction required to be operated according to the priorities of switching directions, and respectively open and close the two circuit-breakers in the switching direction required to be operated; or look up the switching direction containing the current circuit-breaker to be opened in the configuration information according to the priority order, and respectively open and close the two circuit-breakers in the switching direction required to be operated after finding the switching direction with the highest priority.

Alternatively, the acquisition unit is further configured to:
acquire extended configuration information, wherein the extended configuration information contains a plurality of switching directions added after the power grid is extended, and each switching direction in the extended configuration information contains a circuit-breaker to be opened and a circuit-breaker to be closed.

Alternatively, the fast switching device is used to control fast switching operations of a plurality of sub-grids.

The present invention further provides a fast switching device, the fast switching device is used for a switchover between power supplies of a power grid, the power grid comprises at least one sub-grid, each sub-grid comprises a plurality of power lines, the plurality of power lines consist of a plurality of power supply lines, a busbar and a plurality of feeders, each power supply line and each feeder are both connected to the busbar, a circuit-breaker is available on at least two power lines, respectively, and the fast switching device comprises:
at least a memory, configured to store instructions;
at least a processor, configured to execute the method of a fast switching device performing a fast switching operation according to the instructions stored in the memory.

The present invention further provides a readable storage medium, machine-readable instructions are stored in the readable storage medium, and when the machine-readable instructions are executed by a machine, the machine will execute the method of a fast switching device performing a fast switching operation.

By acquiring configuration information in the fast switching device, not only can the fast switching device be flexibly configured according to the practical conditions of a power grid, but also one fast switching device may be adopted to perform switching operations in one power grid at a low cost.

### BRIEF DESCRIPTION OF THE DRAWINGS

Preferred embodiments of the present invention will be described in detail below by reference to the drawings so that those skilled in the art can have a clearer idea of the above-mentioned and other characteristics and advantages of the present invention:
Fig. 1 shows the structure of a power sub-grid according to one embodiment of the present invention.
Figs. 2A and 2B show the structure of a power sub-grid according to another embodiment of the present invention.
Figs. 3A to 3C show the structure of a power sub-grid according to a further embodiment of the present invention.
Figs. 4A and 4B show the structure of a power sub-grid according to still a further embodiment of the present invention.
Fig. 5 is a flowchart of the method of a fast switching device performing a fast switching operation according to one embodiment of the present invention.
Fig. 6 is a flowchart of the method of a fast switching device performing a fast switching operation according to another embodiment of the present invention.
Fig. 7A shows the structure of the fast switching device according to one embodiment of the present invention.
Fig. 7B shows the structure of the fast switching device according to another embodiment of the present invention.

### DETAILED DESCRIPTION OF THE INVENTION

To make clearer the objects, technical solutions, and advantages of the present invention, embodiments will be given below to further describe the present invention in detail.

A power grid usually comprises a plurality of power lines. The power grid may be a part of a large power grid, or may be a power grid on the user side, depending on the practical requirement. Specifically, the power grid may comprise at least one sub-grid, each sub-grid comprises a plurality of power supply lines, a busbar and a plurality of feeders, each power supply line and each feeder are both connected to a busbar, and a circuit-breaker is included on each power supply line. In addition, a busbar may be divided by the circuit-breakers provided on the busbar into a plurality of segments. Of course, no circuit-breaker may be provided on a busbar, depending on the practical condition. A circuit-breaker located on a busbar is called a bus tie circuit-breaker, and a circuit-breaker located on a power supply line is called an incoming circuit-breaker. The specific type of circuit-breaker is not described below and may be determined according to the position of the circuit-breaker.

Specific examples are given below to describe the connection modes of a plurality of power lines.

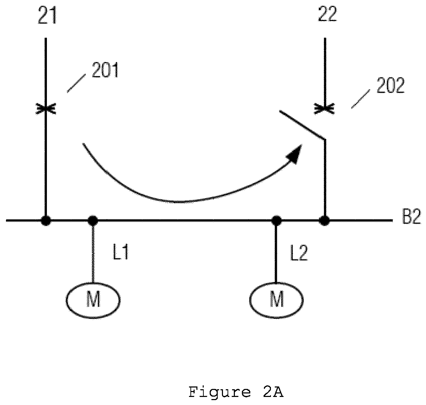

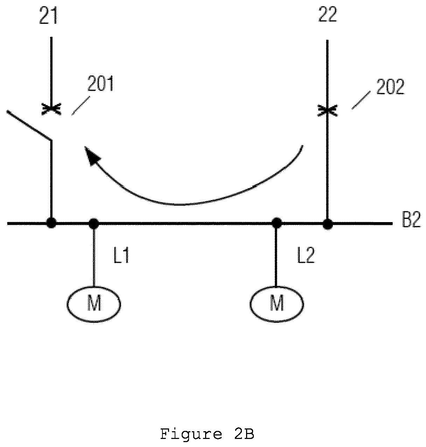

As shown in figs. 2A and 2B, the power grid has two power supply lines, one busbar B2 and two feeders, and the power supply line 21, the power supply line 22, the feeder L1 and the feeder L2 are all connected to the busbar B2. A circuit-breaker 201 is available on the power supply line 21, and a circuit-breaker 202 is available on the power supply line 22. No circuit-breaker is available on the busbar B2.

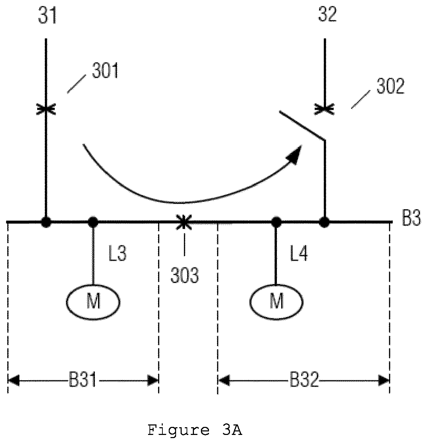

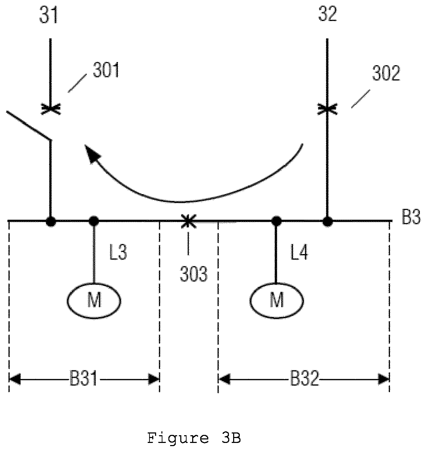

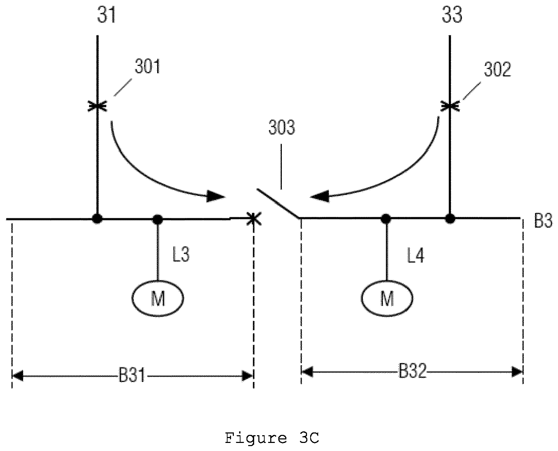

As shown in figs. 3A, 3B and 3C, the power grid has two power supply lines, one busbar B3 and two feeders, and the power supply line 31, the power supply line 32, the feeder L3 and the feeder L4 are all connected to the busbar B3. A circuit-breaker 301 is available on the power supply line 31, a circuit-breaker 302 is available on the power supply line 32, and a circuit-breaker 303 is available on the busbar B3. The circuit-breaker 303 divides the busbar B3 into two segments, which are a busbar segment B31 and a busbar segment B32, the feeder L3 is located on the busbar segment B31 and the feeder L4 is located on the busbar segment B32.

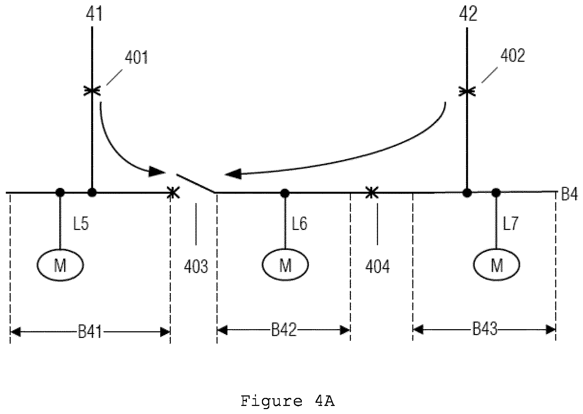

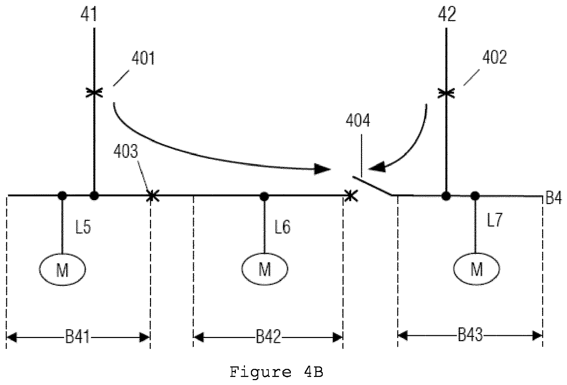

As shown in figs. 4A and 4B, the power grid has two power supply lines, one busbar B4 and three feeders, and the power supply line 41, the power supply line 42, the feeder L5, the feeder L6 and the feeder L7 are all connected to the busbar B4. A circuit-breaker 401 is available on the power supply line 41, a circuit-breaker 402 is available on the power supply line 42, two circuit-breakers 403 and 404 are available on the busbar B4, and the two circuit-breakers divide the busbar B4 into three segments, which are a busbar segment B41, a busbar segment B42 and a busbar segment B43, wherein the feeder L5 is located on the busbar segment B41, the feeder L6 is located on the busbar segment B42 and the feeder L7 is located on the busbar segment B43.

In the drawings, M represents a motor.

### Embodiment 1

The present embodiment provides a method of a fast switching device performing a fast switching operation, the method is used for a power grid, and the fast switching device can switch power supplies of the power grid. The power grid comprises a plurality of sub-grids, each sub-grid comprises a plurality of power lines, the plurality of power lines specifically consist of a plurality of power supply lines, one busbar and a plurality of feeders, each power supply line and each feeder are both connected to the busbar, and a circuit-breaker is available on at least two power supply lines, respectively. The executive body of the present embodiment is the fast switching device. The fast switching device may be integrated into a relay protection device, and the fast switching device is a device having the fast switching function.

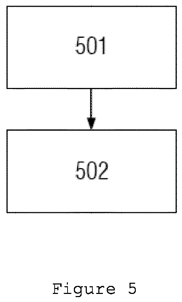

Fig. 5 is a flowchart of the method of a fast switching device performing a fast switching operation according to the present embodiment. The method of the fast switching device performing a fast switching operation comprises:
Step 501: acquire configuration information, wherein the configuration information is determined according to the sub-grid, the configuration information contains information about a plurality of switching directions, the information about each switching direction contains a circuit-breaker to be opened and a circuit-breaker to be closed.

Here, the circuit-breaker to be opened is a circuit-breaker requiring an opening operation in each switching operation of the power supply, and the circuit-breaker to be closed is a circuit-breaker requiring a closing operation in each switching operation.

The configuration information is set according to the practical condition of each sub-grid, that is to say, the method provided in the present embodiment is applicable to each sub-grid and the method is very flexible. The configuration information may be set by an operator on site according to the conditions of the practical connections of a sub-grid. Specifically, the configuration information may be completed through the software in the fast switching device. For example, the operator completes the configuration on the corresponding software interface of a mobile phone or personal computer. The configuration information may contain information about a plurality of switching directions of all executable switching operations in a power grid, or may contain information about passed paths. The information about passed paths can further guarantee the accuracy of a switchover. Here, an executable switching operation refers to an operation which can complete a switchover between power supplies after one circuit-breaker is opened and another circuit-breaker is closed.

In the present embodiment, configuration information may be acquired in different ways. For example, configuration information is entered into a fast switching device after manual operations, or the fast switching device may acquire configuration information on its own. For example, the fast switching device may analyze a sub-grid to obtain all switching directions, and then generates configuration information according to the obtained switching directions. In this way, no labor is required and manpower is saved. Specifically, the fast switching device may acquire information about all circuit-breakers and information about power lines in the sub-grid, and then select a corresponding algorithm according to the practical requirements to make an analysis to obtain switching directions. In addition, the priorities of all switching directions may be sorted during the generation of configuration information. In this way, the required switching direction can conveniently be selected. For example, all switching directions are sorted as a whole, or all switching directions are grouped according to the circuit-breakers to be opened and the priorities of all switching directions in each group are determined. For details, see Table 2. Grouped sorting can reduce the traversal time and complete a switchover between power supplies as soon as possible.

A switching direction in the present embodiment means a switchover from one power supply line to another power supply line. Specifically, a switchover may be realized by opening and closing circuit-breakers on different power supply lines or may be realized by opening and closing circuit-breakers on power supply lines and the busbar. For example, a switchover from one power line to another power line is separately indicated, that is to say, a switchover between power supplies is completed by switching power lines. The circuit-breaker to be opened and the circuit-breaker to be closed may be indicated by use of special identifications. Or the circuit-breaker to be opened and the circuit to be closed may be determined according to the positions of the circuit-breakers. The circuit-breakers to be opened and the circuit-breaker to be closed can be determined in many ways, and these ways will not be described here again.

The arrows in figs. 2A to 4B represent switching directions. As shown in fig. 2A, the switching direction is from the power supply line 21 to the power supply line 22, wherein the circuit-breaker 201 needs to be opened and the circuit-breaker 202 needs to be closed. As shown in fig. 2B, the switching direction is from the power supply line 22 to the power supply line 21, wherein the circuit breaker 202 needs to be opened and the circuit-breaker 201 needs to be closed. As shown in fig. 3A, the switching direction is from the power supply line 31 to the power supply line 32, wherein the circuit-breaker 301 needs to be opened and the circuit-breaker 302 needs to be closed. As shown in fig. 3B, the switching direction is from the power supply line 32 to the power supply line 31 and the passed circuit-breaker is the circuit-breaker 303, wherein the circuit-breaker 302 needs to be opened and the circuit-breaker 301 needs to be closed. As shown in fig. 3C, two switching directions are shown, one switching direction is from the power supply line 31 to the busbar segment B32, wherein the circuit-breaker 301 needs to be opened and the circuit-breaker 303 needs to be closed, and the other switching direction is from the power supply line 32 to the busbar segment B31, wherein the circuit breaker 302 needs to be opened and the circuit-breaker 303 needs to be closed. As shown in fig. 4A, a plurality of switching directions exist and only two switching directions are shown. The two switching directions are respectively from the power supply line 41 to the busbar segment B42, wherein the circuit-breaker 401 needs to be opened and the circuit-breaker 403 needs to be closed, and from the power supply line 42 to the busbar segment B41 and the passed circuit-breaker is the circuit-breaker 404, wherein the circuit-breaker 402 needs to be opened and the circuit-breaker 403 needs to be closed. As shown in fig. 4B, one switching direction is from the power supply line 41 to the busbar segment B43, the passed circuit-breaker is the circuit-breaker 403, wherein the circuit-breaker 401 needs to be opened and the circuit-breaker 404 needs to be closed, and the other switching direction is from the power supply line 42 to the busbar segment B41, wherein the circuit-breaker 402 needs to be opened and the circuit-breaker 404 needs to be closed.

It should be noted that the configuration information may also contain information about the passed circuit-breakers. For example, a column in the configuration table is used to store information about the passed circuit-breakers.

After being received, configuration information may be stored in the fast switching device. Specifically, a blank configuration table may be preset in the fast switching device, an operator may enter configuration information in the configuration table, and the fast switching device receives and stores the configuration. In the case that the fast switching device itself acquires configuration information, the fast switching device automatically stores the configuration information in the configuration table. In this way, if it is necessary to perform a switching operation later, the fast switching device can conveniently and quickly operate the circuit-breaker to be opened and the circuit-breaker to be closed only after looking up the configuration table.

Step 502: perform a fast switching operation according to the configuration information.

The fast switching device can perform a corresponding switching operation according to the configuration information. It should be pointed out that a fast switching operation performed according to the configuration information here does not mean that the fast switching operation will definitely happen, but only means that the fast switching operation may happen. That is to say, as long as the fast switching device has the function of performing a fast switching operation according to configuration information, the fast switching device falls within the scope of protection of the present invention.

Step 502 may specifically comprise the following two implementation modes: Mode 1: determine the current circuit-breaker to be opened;
acquire at least one switching direction from the configuration information according to the current circuit-breaker to be opened, wherein the switching direction contains the current circuit-breaker to be opened;
determine the switching direction to be operated according to the priorities of the switching directions;
open and close the two circuit-breakers in the switching direction to be operated, respectively.

When a power supply needs to be disconnected, the circuit-breaker needs to be opened, that is to say, the circuit-breaker to be opened needs to be opened. When a power supply needs to be switched to, the circuit-breaker on the power supply line needs to be closed, that is to say, the circuit-breaker to be closed needs to be closed. The circuit-breaker to be opened may directly be determined by the fast switching device. Specifically, the fast switching device may be triggered by other devices to determine the circuit-breaker to be opened. The circuit-breaker to be opened may be determined according to the prior art, which will not be described here again.

In addition, the mode of traversing configuration information may be adopted. The switching directions containing the circuit-breakers to be opened are selected from the configuration information, and then the switching direction with the highest priority is used as the switching direction for which a switching operation needs to be performed. The priorities of switching directions may be determined in advance. For example, when configuration information is received, the configuration information contains the priorities of switching directions. Specifically, the priorities of switching directions may be identified, or may be sorted in the configuration table. For example, switching directions ranked in the front of the configuration table have higher priorities, and switching directions ranked at the rear of the configuration table have lower priorities. Of course, the priorities of switching directions may be otherwise determined. The other ways of determining the priorities of switching directions will not be described here again.

According to mode 1, the fast switching device opens the target circuit-breaker and closes the other circuit-breaker to complete a switching operation.

Mode 2: determine the current circuit-breaker to be opened;
or look up the switching direction containing the current circuit-breaker to be opened in the configuration information in turn according to the priority order;
after finding the switching direction with the highest priority, open and close the two circuit-breakers in the switching direction to be operated.

When a power supply needs to be disconnected, the circuit-breaker needs to be opened. The circuit-breaker to be opened may directly be determined by the fast switching device, and the determination of the circuit-breaker to be opened will not be described here again. Specifically, the switching directions may be ranked in turn according to the priority order in the configuration table. For example, the priorities decrease in turn from the top down. The fast switching device traverses the configuration table. The first switching direction found in the configuration table and containing the circuit-breaker to be opened is the required switching direction with the highest priority. The fast switching device opens the circuit-breaker to be opened in the switching direction and closes the other circuit-breaker to complete a switching operation.

Alternatively, the fast switching device in the present embodiment can control fast switching operations of a plurality of sub-grids. That is to say, one power grid requires only one fast switching device, and thus the cost is greatly reduced.

In the present embodiment, by acquiring configuration information in the fast switching device, not only can the fast switching device be flexibly configured according to the practical conditions of a power grid, but also one fast switching device may be adopted to perform switching operations in one power grid at a low cost.

### Embodiment 2

The present embodiment further describes the method of a fast switching device performing a fast switching operation in embodiment 1.

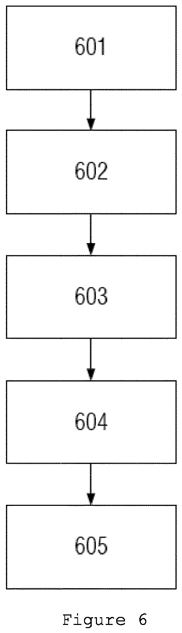

Fig. 6 is a flowchart of the method of a fast switching device performing a fast switching operation according to the present embodiment. The method comprises:
Step 601: acquire configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation;
this step is consistent with step 501 and will not be described here again.

Step 602: store configuration information.

This step is consistent with step 501 and will not be described here again.

Step 603: acquire extended configuration information, wherein the extended configuration information contains a plurality of switching directions added after the power grid is extended, and each switching direction in the extended configuration information contains a circuit-breaker to be opened and a circuit-breaker to be closed.

After a power grid is extended, new power lines, circuit-breakers or busbars may be added, or even new sub-grids may be added, and thus switching directions are added. In this case, extended configuration information may be added in the fast switching device. The specific method of acquiring extended configuration information is consistent with the method of acquiring configuration information and will not be described here again.

Step 604: store extended configuration information.

For example, the extended configuration information is added in the configuration table where configuration information is stored, that is to say, the fast switching device may acquire all configuration information according to one configuration table. Of course, priorities may be set for the switching directions in the extended configuration information. In addition, during this process, the priorities of the switching directions in the configuration information may be changed, that is to say, the switching directions in the configuration information and the extended configuration information may be combined for priority sorting.

Step 605: perform a fast switching operation according to the configuration information and the extended configuration information.

After the extended configuration information is stored, the group of circuit-breakers for which a fast switching operation needs to be performed may be determined according to the configuration information and the extended configuration information. As mentioned in the previous embodiment, the fast switching operation is an operation which can be performed, instead of an operation which must be performed, that is to say, the fast switching operation will be performed only when necessary.

It should be pointed out that a fast switching operation may be performed according to configuration information between step 603 and step 605. That is to say, a fast switching operation may be performed according to configuration information before the extended configuration information is stored.

According to the present embodiment, after a power grid is extended, configuration information in the fast switching device may be updated. The fast switching device can conveniently, quickly and compatibly control fast switching operations of the extended power grid, thus reducing the cost.

### Embodiment 3

Specific examples are given in the present embodiment to further describe the method of a fast switching device performing a fast switching operation in the previous embodiments.

When it is necessary to set configuration information for a power sub-grid or a power grid, the operator can set the required configuration information in the fast switching device according to the on-site conditions. A blank configuration table is preset in the fast switching device in the present embodiment, and the operator can operate the corresponding software of the fast switching device at the client to send configuration information to the fast switching device. After receiving the configuration information, the fast switching device stores it in the configuration table. Table 1 lists the configuration information acquired according to fig. 1, and the switching directions in the configuration information are denoted by the power lines where the circuit-breakers are located. As shown in fig. 1, the busbar is divided by two circuit-breakers 104 and 105 into three segments, which are busbar segment B11, busbar segment B12 and busbar segment B13, respectively.

**Table 1**

| Switching direction | | Circuit-breaker to be opened | Circuit-breaker to be closed | Passed circuit-breaker |
|---|---|---|---|---|
| Direction 1 | Power supply line 11 -> power supply line 12 | Circuit-breaker 101 | Circuit-breaker 102 | Circuit-breaker 104 |
| Direction 2 | Power supply line 11 -> power supply line 13 | Circuit-breaker 101 | Circuit-breaker 103 | Circuit-breaker 104, circuit-breaker 105 |
| Direction 3 | Power supply line 11 -> busbar segment B12 | Circuit-breaker 101 | Circuit-breaker 104 | |
| Direction 4 | Power supply line 11 -> busbar segment B13 | Circuit-breaker 101 | Circuit-breaker 105 | Circuit-breaker 104 |
| Direction 5 | Power supply line 12 -> power supply line 11 | Circuit-breaker 102 | Circuit-breaker 101 | Circuit-breaker 104 |
| Direction 6 | Power supply line 12 -> power supply line 13 | Circuit-breaker 102 | Circuit-breaker 103 | Circuit-breaker 105 |
| Direction 7 | Power supply line 12 -> busbar segment B11 | Circuit-breaker 102 | Circuit-breaker 104 | |
| Direction 8 | Power supply line 12 -> busbar segment B13 | Circuit-breaker 102 | Circuit-breaker 105 | |
| Direction 9 | Power supply line 13 -> power supply line 11 | Circuit-breaker 103 | Circuit-breaker 101 | Circuit-breaker 105, circuit-breaker 104 |
| Direction 10 | Power supply line 13 -> power supply line 12 | Circuit-breaker 103 | Circuit-breaker 102 | Circuit-breaker 105 |
| Direction 11 | Power supply line 13 -> busbar segment B11 | Circuit-breaker 103 | Circuit-breaker 104 | Circuit-breaker 105 |
| Direction 12 | Power supply line 13 -> busbar segment B12 | Circuit-breaker 103 | Circuit-breaker 105 | |
| Direction 13 | Busbar segment B12 -> power supply line 11 | Circuit-breaker 104 | Circuit-breaker 101 | |
| Direction 14 | Busbar segment B11 -> power supply line 12 | Circuit-breaker 104 | Circuit-breaker 102 | |
| Direction 15 | Busbar segment B13 -> power supply line 12 | Circuit-breaker 105 | Circuit-breaker 102 | |
| Direction 16 | Busbar segment B12 -> power supply line 13 | Circuit-breaker 105 | Circuit-breaker 103 | |

Alternatively, a circuit-breaker to be opened and a circuit-breaker to be closed in table 1 already clearly indicate a switching direction, and therefore the switching direction column may be absent from table 1.

In addition, the switching directions in table 1 are arranged in a descending order of the priorities. The fast switching device identifies the circuit-breaker 101 to be opened, traverses table 1 and finds that the group of circuit-breakers with the highest priority in table 1 comprises the circuit-breaker 101 serving as the target. Therefore, the fast switching device may perform a switching operation for this group of circuit-breakers, namely, open the circuit-breaker 101 and close the circuit-breaker 102.

Of course, the priorities may be otherwise customized in practical applications. For example, switching directions containing the same circuit-breaker to be opened are grouped, and then switching directions in each group are sorted by priority, as listed in table 2.

**Table 2**

| Priority | Priority group 1 | Priority group 2 | Priority group 3 |
|---|---|---|---|
| 1 | Direction 1: Power supply line 11 -> power supply line 12 | Direction 5: Power supply line 12 -> power supply line 11 | Direction 9: Power supply line 13 -> power supply line 11 |
| 2 | Direction 2: Power supply line 11 -> power supply line 13 | Direction 6: Power supply line 12 -> power supply line 13 | Direction 10: Power supply line 13 -> power supply line 12 |
| 3 | Direction 3: Power supply line 11 -> busbar segment B12 | Direction 7: Power supply line 12 -> busbar segment B11 | Direction 11: Power supply line 13 -> busbar segment B11 |
| 4 | Direction 4: Power supply line 11 -> busbar segment B13 | Direction 8: Power supply line 12 -> busbar segment B13 | Direction 12: Power supply line 13 -> busbar segment B12 |

In this way, when the priorities of switching directions are not indicated in table 1, the fast switching device needs to determine the group of the circuit-breakers to be opened in table 2, and then selects the switching direction with the highest priority in the group as the switching direction for which the fast switching device will perform a switching operation next.

### Embodiment 4

The present embodiment provides a fast switching device, and the fast switching device is used to execute the method of performing a fast switching operation in the previous embodiments. The fast switching device is used for a switchover between power supplies of a power grid, the power grid comprises at least one sub-grid, each sub-grid comprises a plurality of power lines, the plurality of power lines consist of a plurality of power supply lines, a busbar and a plurality of feeders, each power supply line and each feeder are both connected to the busbar, and a circuit-breaker is available on at least two power lines, respectively.

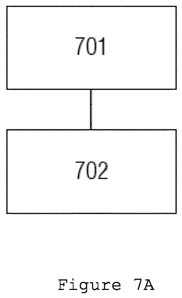

Fig. 7A shows the structure of the fast switching device according to the present embodiment. The fast switching device comprises an acquisition unit 701 and an execution unit 702. Wherein the acquisition unit 701 is configured to acquire configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation; the execution unit 702 is configured to perform a fast switching operation according to the configuration information.

Alternatively, the configuration information contains the priority of each switching direction or the priority of each switching direction in each group after switching directions are grouped according to the circuit-breakers to be opened.

Alternatively, the acquisition unit 701 is further configured to store configuration information in a configuration table in the fast switching device.

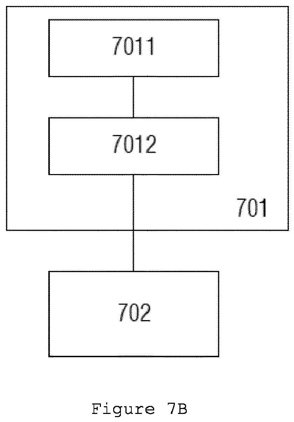

Alternatively, the acquisition unit 701 shown in fig. 7B specifically comprises an analysis subunit 7011 and a generation subunit 7012, wherein the analysis subunit 7011 is configured to analyze a sub-grid to obtain all switching directions, and the generation subunit 7012 is configured to generate configuration information according to the switching directions.

Alternatively, the execution unit 702 is specifically configured to:
determine the current circuit-breaker to be opened;
acquire at least one switching direction from the configuration information according to the current circuit-breaker to be opened, wherein the switching direction contains the current circuit-breaker to be opened, determine the switching direction required to be operated according to the priorities of switching directions, and respectively open and close the two circuit-breakers in the switching direction required to be operated; or look up the switching direction containing the current circuit-breaker to be opened in turn in the configuration information according to the priority order, and respectively open and close the two circuit-breakers in the switching direction required to be operated after finding the switching direction with the highest priority.

In addition, the fast switching device may be configured to control fast switching operations of a plurality of sub-grids.

The ways the units in the present embodiment work are the same as those in the previous embodiments and will not be described here again.

In the present embodiment, by acquiring configuration information, not only can the fast switching device be flexibly configured according to the practical conditions of a power grid, but also one fast switching device may be adopted to perform switching operations in one power grid at a low cost.

### Embodiment 5

The present embodiment further describes the fast switching device in embodiment 4.

In the present embodiment, the acquisition unit 701 is further configured to acquire extended configuration information, wherein the extended configuration information contains a plurality of switching directions added after the power grid is extended, and each switching direction in the extended configuration information contains a circuit-breaker to be opened and a circuit-breaker to be closed.

The ways the units in the present embodiment work are the same as those in the previous embodiments and will not be described here again.

According to the present embodiment, after a power grid is extended, configuration information in the fast switching device may be updated. The fast switching device can conveniently, quickly and compatibly control fast switching operations of the extended power grid, thus reducing the cost.

The present invention further provides a fast switching device and the fast switching device comprises at least a memory and at least a processor, wherein the memory is used to store instructions. The processor is used to execute the method of a fast switching device performing a fast switching operation in any of the previous embodiments according to the instructions stored in the memory.

The embodiments of the present invention further provide a readable storage medium. Machine-readable instructions are stored in the readable storage medium, and when the machine-readable instructions are executed by a machine, the machine will execute the method of a fast switching device performing a fast switching operation in any of the previous embodiments.

Machine-readable instructions are stored in the readable medium, and when the machine-readable instructions are executed by a processor, the processor will execute any of the methods described in the previous embodiments. Specifically, a system or device equipped with a readable storage medium can be provided. Software program codes which can realize the function in any of the above-mentioned embodiments are stored in the readable storage medium and the computer or processor of the system or device can read out and execute the machine-readable instructions stored in the readable storage medium.

In this case, program codes read from the readable storage medium themselves can realize the function in any of the above-mentioned embodiments. Therefore, machine-readable codes and the readable storage medium where machine-readable codes are stored constitute a part of the present invention.

Embodiments of readable storage media include floppy disks, hard disks, magneto-optical disks, compact disks (for example, compact disk read-only memory (CD-ROM)), compact disk-recordable (CD-R), compact disk-rewritable (CD-RW), digital video disk-read only memory (DVD-ROM), digital versatile disk-random access memory (DVD-RAM), digital versatile disk-recordable (DVD-RW), digital versatile disk-rewritable (DVD+RW)), magnetic tape, non-volatile memory card, and read-only memory (ROM). Alternatively, program codes can be downloaded from the server computer or cloud over a communication network.

Those skilled in the art should understand that variants and modifications can be made without departing from the essence of the present invention. Therefore, the scope of protection of the present invention should be defined by the attached claims.

It should be noted that not all steps or units in the above-mentioned flowcharts and system structure diagrams are required, and some steps or units can be ignored, depending on the actual requirements. The execution sequence of the steps is not fixed and may be adjusted as required. The device structures described in the above-mentioned embodiments can be physical structures or logical structures. That is to say, some units may be realized by a physical entity, or some units may be realized by a plurality of physical entities or may jointly be realized by some components in a plurality of self-contained devices.

In the above-mentioned embodiments, hardware units can mechanically or electrically be realized. For example, a hardware unit or processor can comprise a permanent dedicated circuit or logic (for example, special processor, FPGA, or ASIC) to complete the corresponding operations. A hardware unit or processor can further comprise a programmable logic or circuit (for example, a general processor or other programmable processor) and can complete the corresponding operations through temporary software setting. The specific implementation mode (mechanical mode, or dedicated permanent circuit, or circuit which is temporarily set) can be determined on the basis of consideration of cost and time.

The present invention is revealed and described above in detail in combination with the drawings and preferred embodiments. However, the present invention is not limited to the disclosed embodiments. On the basis of the plurality of above-mentioned embodiments, those skilled in the art can know that more embodiments of the present invention can be obtained by combining the code review means in the above-mentioned different embodiments, and all these embodiments should also fall within the scope of protection of the present invention.

## Claims

1. A method of a fast switching device performing a fast switching operation, the fast switching device being used for a switchover between power supplies of a power grid, the power grid comprising at least one sub-grid, each sub-grid comprising a plurality of power lines, the plurality of power lines consisting of a plurality of power supply lines, a busbar and a plurality of feeders, each power supply line and each feeder being both connected to the busbar, a circuit-breaker being available on at least two power lines, respectively, wherein the method comprises:
acquiring configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation, and
performing a fast switching operation according to the configuration information.

2. The method as claimed in claim 1, wherein acquiring configuration information comprises:
analyzing the sub-grid to obtain switching directions;
generating the configuration information according to the switching directions.

3. The method as claimed in claim 1 or 2, wherein the configuration information contains the priority of each switching direction or the priority of each switching direction in each group after switching directions are grouped according to the circuit-breakers to be opened.

4. The method as claimed in any one of claims 1 - 3, wherein after the configuration information is received but before a fast switching operation is performed according to the configuration information, the method further comprises:
storing the configuration information in a configuration table in the fast switching device.

5. The method as claimed in any one of claims 1 - 4, wherein performing a fast switching operation according to the configuration information comprises:
determining the current circuit-breaker to be opened;
acquiring at least one switching direction from the configuration information according to the current circuit-breaker to be opened, wherein the switching direction contains the current circuit-breaker to be opened, determining the switching direction required to be operated according to the priorities of switching directions, and respectively opening and closing the two circuit-breakers in the switching direction required to be operated; or looking up the switching direction containing the current circuit-breaker to be opened in the configuration information according to the priority order, and respectively opening and closing the two circuit-breakers in the switching direction required to be operated after finding the switching direction with the highest priority.

6. The method as claimed in any one of claims 1 - 5, wherein at least one switching direction contains a circuit-breaker located on the busbar.

7. The method as claimed in any one of claims 1 - 6, wherein after acquiring configuration information, the method further comprises: acquiring extended configuration information, wherein the extended configuration information contains a plurality of switching directions added after the power grid is extended, and each switching direction in the extended configuration information contains a circuit-breaker to be opened and a circuit-breaker to be closed.

8. The method as claimed in any one of claims 1 - 7, wherein the fast switching device is used to control fast switching operations of a plurality of sub-grids.

9. A fast switching device, the fast switching device being used for a switchover between power supplies of a power grid, the power grid comprising at least one sub-grid, each sub-grid comprising a plurality of power lines, the plurality of power lines consisting of a plurality of power supply lines, a busbar and a plurality of feeders, each power supply line and each feeder being both connected to the busbar, a circuit-breaker being available on at least two power lines, respectively, wherein the fast switching device comprises:
an acquisition unit, configured to acquire configuration information, wherein the configuration information is determined according to the sub-grid, the configuration information contains information about a plurality of switching directions, the information about each switching direction contains a circuit-breaker to be opened and a circuit-breaker to be closed, the circuit-breaker to be opened is a circuit-breaker requiring an opening operation in each switching operation of the power supply, and the circuit-breaker to be closed is a circuit-breaker requiring a closing operation in each switching operation, and
an execution unit, configured to perform a fast switching operation according to the configuration information.

10. The fast switching device as claimed in claim 9, wherein the acquisition unit specifically comprises:
an analysis subunit, configured to analyze the sub-grid to obtain switching directions, and
a generation subunit, configured to generate the configuration information according to the switching directions.

11. The fast switching device as claimed in claim 9 or 10, wherein the execution unit is specifically configured to:
determine the current circuit-breaker to be opened;
acquire at least one switching direction from the configuration information according to the current circuit-breaker to be opened, wherein the switching direction contains the current circuit-breaker to be opened, determine the switching direction required to be operated according to the priorities of switching directions, and respectively open and close the two circuit-breakers in the switching direction required to be operated; or look up the switching direction containing the current circuit-breaker to be opened in turn in the configuration information according to the priority order, and respectively open and close the two circuit-breakers in the switching direction required to be operated after finding the switching direction with the highest priority.

12. The fast switching device as claimed in any one of claims 9 - 11, wherein the acquisition unit is further configured to:
acquire extended configuration information, wherein the extended configuration information contains a plurality of switching directions added after the power grid is extended, and each switching direction in the extended configuration information contains a circuit-breaker to be opened and a circuit-breaker to be closed.

13. The fast switching device as claimed in any of claims 9 - 12, wherein the fast switching device is configured to control fast switching operations of a plurality of sub-grids.

14. A fast switching device, the fast switching device being used for a switchover between power supplies of a power grid, the power grid comprising at least one sub-grid, each sub-grid comprising a plurality of power lines, the plurality of power lines consisting of a plurality of power supply lines, a busbar and a plurality of feeders, each power supply line and each feeder being both connected to the busbar, a circuit-breaker being available on at least two power lines, respectively, wherein the fast switching device comprises:
at least a memory, configured to store instructions;
at least a processor, configured to execute the method of a fast switching device performing a fast switching operation as claimed in any of claims 1 to 7 according to the instructions stored in the memory.

15. A readable storage medium, wherein machine-readable instructions are stored in the readable storage medium, and when the machine-readable instructions are executed by a machine, the machine will execute the method of a fast switching device performing a fast switching operation as claimed in any of claims 1 to 7.
